Europäisches Patentamt

**European Patent Office**

Office européen des brevets

(19)

(11) Veröffentlichungsnummer: **0 012 449**
**B1**

(12)

# EUROPÄISCHE PATENTSCHRIFT

(45) Veröffentlichungstag der Patentschrift:
14.03.84

(51) Int. Cl.³: **B 01 D 59/12**

(21) Anmeldenummer: **79105202.0**

(22) Anmeldetag: **17.12.79**

(54) Verwendung einer Vorrichtung zur Abtrennung und Anreicherung eines Wasserstoffisotops aus einem Wasserstoffisotopengemisch.

(30) Priorität: **18.12.78 DE 2854682**

(43) Veröffentlichungstag der Anmeldung:
**25.06.80 Patentblatt 80/13**

(45) Bekanntmachung des Hinweises auf die Patenterteilung:
**14.03.84 Patentblatt 84/11**

(84) Benannte Vertragsstaaten:
**BE CH FR GB IT**

(56) Entgegenhaltungen:
**FR - A - 1 235 358**
**FR - A - 1 240 085**
**FR - A - 1 317 331**
**GB - A - 936 421**

(73) Patentinhaber: **Kernforschungsanlage Jülich Gesellschaft mit beschränkter Haftung, Postfach 1913, D-5170 Jülich (DE)**

(72) Erfinder: **Ali-Khan, Imran, Dr., Artilleriestrasse 41, D-5170 Jülich (DE)**
Erfinder: **Dietz, Karl-Jürgen, Dr., Mary Tavy, Orchard Close East Hendred, Oxon 12 8IJ (GB)**
Erfinder: **Waelbroeck, Francoise, Prof. Dr., Mannheimer Strasse 4, D-5170 Jülich (DE)**
Erfinder: **Wienhold, Peter, Dr., Kopernikusstrasse 10, D-5170 Jülich (DE)**

BUNDESDRUCKEREI BERLIN

Verwendung einer Vorrichtung zur Abtrennung und Anreicherung eines Wasserstoffisotops
aus einem Wasserstoffisotopengemisch

Die Erfindung bezieht sich auf die Verwendung einer Vorrichtung bestehend aus zwei allseitig umschlossenen mittels Ventilen verschließbaren Kammern mit Wandungen aus für Wasserstoffisotopen nicht permeablem Material, von denen eine mit einer Gaszuleitung und einer Gasableitung verbunden und die andere evakuierbar ist, und die durch eine bevorzugt für atomaren Wasserstoff, für molekularen Wasserstoff nur in geringerem Maße permeable Wandung voneinander getrennt sind, wobei in der mit der Gaszuführung und -ableitung verbundenen Kammer eine Einrichtung zur Umwandlung von molekularem Wasserstoff in atomaren Wasserstoff angeordnet ist.

Eine solche Vorrichtung wird in der gleichzeitig eingereichten europäischen Patentanmeldung 79 105 201.2 (Veröffentlichungs-Nr. 00 12 448) näher beschrieben. Nach diesem Vorschlag wird die Vorrichtung zur Abtrennung eines Wasserstoffisotopengemischs von einem Gasgemisch vorgesehen, in dem dieses Isotopengemisch enthalten ist. Diese Vorrichtung ist jedoch auch zum Abtrennen von in dem Wasserstoffisotopengemisch enthaltenen Isotopen sowie gegebenenfalls zu deren Kompression brauchbar.

Gegenstand der vorliegenden Erfindung ist daher die Verwendung dieser Vorrichtung zur Abtrennung und Anreicherung eines Wasserstoffisotops aus einem gasförmigen Wasserstoffisotopengemisch.

Dabei ist es vorteilhaft, wenn als Einrichtung zur Umwandlung von molekularem in atomaren Wasserstoff ein auf > 1500 K aufheizbarer Körper, insbesondere Faden oder Draht, aus hochschmelzendem Material, wie Wolfram, Iridium, Osmium, Rhenium, verwendet wird und die bevorzugt für atomaren Wasserstoff permeable Wandung auf eine Temperatur von 400 bis etwa 800 K aufheizbar ist. Die permeable Wandung besteht vorzugsweise aus Eisen, wie z. B. $\alpha$-Eisen, Stahl, wie z. B. ein Stahl der Zusammensetzung ST 60 oder einem austenitischen Stahl, oder Nickel oder auch einer Nickelbasislegierung. Vorteilhaft ist es weiter, die Vorrichtung in einer Ausführungsform zu verwenden, bei der die Kammern koaxial zueinander angeordnet sind, wobei der schwer schmelzbare Faden oder Draht mit einer sonstigen Form in der gemeinsamen Achse der Kammern vorgesehen und die permeable Wandung als den Körper aus hochschmelzendem Material mit Abstand umgebender Hohlzylinder ausgebildet ist.

Zwar ist die Trennung von Isotopen durch Diffusion durch eine Trennwand beispielsweise aus der FR-PS 1 317 331 bekannt, die eine Trennung von Isotopen durch Diffusion aus einer ersten Kammer in eine zweite Kammer durch eine Trennwand zeigt, die jedoch porös ist. Dabei soll zusätzlich ein elektrisches Feld innerhalb der ersten Kammer für eine elektrokonvektive Turbulenz sorgen, wodurch die laminare Grenzschicht an der Oberfläche der porösen Trennwand zumindest partiell zerstört werden soll. Diese bekannte Diffusionstrennung setzt ein Druckgefälle von der ersten zur zweiten Kammer voraus.

Ein solches treibendes Druckgefälle wird auch für die Wasserstoffisotopentrennung durch Permeation durch dünne Metallmembranen, insbesondere durch Palladium oder Palladiumlegierungen, benötigt, wie sie von A. S. Darling u. a. in Chem. Ing. Techn. 37 (1965), 18—27, insbesondere Seite 26 angedeutet wird.

Ein solches treibendes Druckgefälle steht jedoch bisweilen nicht oder nicht ausreichend zur Verfügung. So ist es mittels der bislang bekannten Verfahren nicht möglich — wie sich das häufig als notwendig erweist — zum Beispiel Tritium aus dem Kühlkreislauf eines gasgekühlten Hochtemperaturreaktors oder aus dem Brennstoffkreislauf eines Fusionsreaktors abzutrennen.

Ferner ist für die meisten Anwendungsfälle eine Kompression des abgetrennten oder angereicherten Isotops erforderlich. Das macht die Nachschaltung einer weiteren Verfahrensstufe notwendig, wobei für den Fall, daß dazu Kompressoren mit beweglichen Teilen verwendet werden, die Gefahr von Verunreinigungen durch Ölreste infolge der notwendigen Schmierung dieser Teile hinzukommt.

Durch die Erfindung werden diese Nachteile vermieden und eine sehr wirksame Abtrennung eines Wasserstoffisotops und seine Anreicherung aus einem gasförmigen Wasserstoffisotopengemisch ohne treibende Druckdifferenz ermöglicht, da durch die ständige Erzeugung von atomarem Wasserstoff im Gasraum der Gaszufuhrkammer ein als Triebkraft wirkendes Überangebot desselben vor der Permeationswand vorliegt, da der permeierte Wasserstoff die Trennwand als molekularer Wasserstoff verläßt, so daß der Partialdruck des atomaren Wasserstoffs in der anderen Kammer stets praktisch gleich Null ist. Dadurch kann auch ohne zusätzliche Vorrichtung eine Verdichtung der abgetrennten Isotopen oder des angereicherten Isotopengemischs erreicht werden.

Um eine sehr weitgehende Abtrennung eines Isotops aus einem Wasserstoffisotopengemisch in kontinuierlichem Betrieb zu erhalten, besteht eine vorteilhafte Ausgestaltung der Erfindung darin, daß mehrere Vorrichtungen kaskadenförmig hintereinandergeschaltet sind.

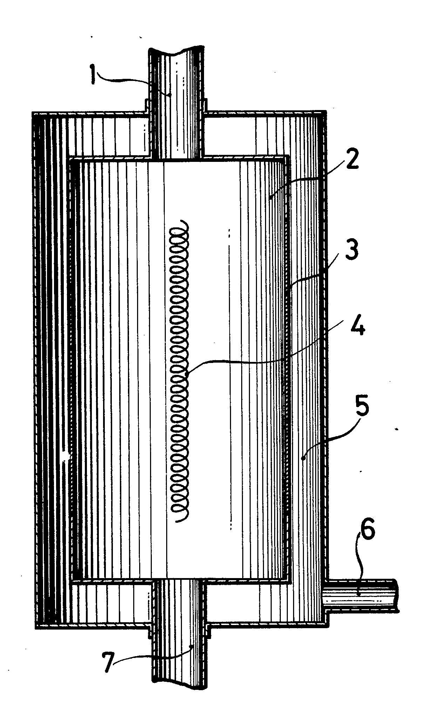

Die Trennvorrichtung ist auf der Zeichnung schematisch dargestellt. Das Wasserstoffisotopengemisch wird über eine mittels eines in der Zeichnung nicht dargestellten Ventils verschließbare Zuleitung 1 in eine allseits verschließbare Kammer 2 eingeleitet. Die Kammer ist zylindrisch ausgebildet, wobei ein Teil der Zylinderwandung 3 für Wasserstoffatome permeabel ist. In der Achse der zylindrischen Kammer 2 ist ein Faden oder Draht 4 aus einem hochschmelzenden Stoff, wie zum Beispiel Wolfram, angeordnet, dessen Länge der Länge des für atomaren Wasserstoff permeablen Teils der Wandung des Zylinders entspricht und der mittels einer in der Zeichnung nicht dargestellten Heizvorrichtung auf eine Temperatur bis zu etwa 2000 K aufheizbar ist. Die zylindrische Kammer 2 ist koaxial von einer Kammer 5 umgeben, die zum Auffangen des in dem Wasserstoffisotopengemisch in molekularer Form enthaltenen, sodann mittels des Wolframfadens oder -drahtes in atomaren Wasserstoff umgewandelten und nach dessen Durchtritt durch den bevorzugt für atomaren Wasserstoff permeablen Teil 3 der Wandung der zylindrischen Kammer 2 in die molekulare Form übergehenden Wasserstoffs bestimmt ist.

Wie der Zeichnung zu entnehmen ist, passiert dazu das durch die Zuleitung 1 in die zylindrische Kammer 2 eingeleitete Wasserstoffisotopengemisch den Faden oder Draht 4 aus Wolfram. Der in dem eingeleiteten Wasserstoffisotopengemisch enthaltene molekulare Wasserstoff wird dabei in atomaren Wasserstoff umgewandelt und gelangt nach dem Durchdringen der bevorzugt für atomaren Wasserstoff permeablen Wandung in die Kammer 5. Er verbleibt nach Rekombination je zweier Wasserstoffatome in Wasserstoffmoleküle in der evakuierbaren Kammer 5 so lange, bis er nach Erreichen eines vorbestimmten Drucks über eine Ableitung 6 aus der Kammer 5 abgezogen wird. Das nach dem Passieren des Fadens oder Drahtes 4 aus Wolfram verbleibende Isotopengemisch wird über die an die mit der Kammer 2 verbundene, mittels eines in der Zeichnung nicht dargestellten Ventils verschließbare Ableitung 7 aus der Kammer 2 abgezogen, so daß die Vorrichtung gemäß der Erfindung durch stetige Zu- und Ableitung des Wasserstoffisotopengemischs, von dem die Abtrennung des Wasserstoffisotops erfolgen soll, kontinuierlich betrieben werden kann. Zugleich kann infolgedessen der Druck des Wasserstoffgases in der Kammer 5 bis auf eine für zahlreiche Anwendungsfälle hinreichende Höhe erhöht werden.

Ausführungsbeispiel

Wird in eine zuvor evakuierte Kammer der erfindungsgemäß verwendeten Vorrichtung ein Wasserstoffisotopengemisch, bestehend aus Deuterium und 0,1‰ Tritium, eingeleitet, wobei das Isotopengemisch unter einem Druck von 1 mbar steht und wird dabei ein Wolframfaden mit einer Gesamtoberfläche von 0,3 cm² bei einer Leistung von etwa 15 W auf eine Temperatur von 2000 K aufgeheizt und eine auf etwa 700 K aufgeheizte, für atomaren Wasserstoff bevorzugt permeable Wandung aus $\alpha$-Eisen mit einer Dicke von etwa 1 mm und einer Gesamtfläche von 100 cm² verwendet, so werden nach Erreichen des Gleichgewichtszustandes für die Partialdrucke von Deuterium und Tritium in der ein Volumen von 0,1 l aufweisenden Auffangkammer (5) 400 mbar (Deuterium) bzw. 0,02 mbar (Tritium) erreicht.

Durch wiederholten Betrieb oder kaskadenförmige Hintereinanderschaltung mehrerer Vorrichtungen gemäß der Erfindung läßt sich eine beliebig genaue Abtrennung des Tritiums vom Deuterium erzielen.

**Patentansprüche**

1. Verwendung einer Vorrichtung bestehend aus zwei allseitig umschlossenen mittels Ventilen verschließbaren Kammern mit Wandungen aus für Wasserstoffisotopen nicht permeablem Material, von denen eine mit einer Gaszuleitung einer Gasableitung verbunden und die andere evakuierbar ist, und die durch eine bevorzugt für atomaren Wasserstoff, für molekularen Wasserstoff nur in geringerem Maße permeable Wandung voneinander getrennt sind, wobei in der mit der Gaszuführung und -ableitung verbundenen Kammer eine Einrichtung zur Umwandlung von molekularem Wasserstoff in atomaren Wasserstoff angeordnet ist, zur Abtrennung und Anreicherung eines Wasserstoffisotops aus einem gasförmigen Wasserstoffisotopengemisch.

2. Verwendung nach Anspruch 1, dadurch gekennzeichnet, daß die Einrichtung zur Umwandlung von molekularem Wasserstoff in atomaren Wasserstoff durch einen Faden oder Draht gebildet wird.

3. Verwendung nach Anspruch 1 oder 2, dadurch gekennzeichnet, daß die Kammern koaxial angeordnet sind, wobei die Einrichtung zur Umwandlung von molekularem Wasserstoff in atomaren Wasserstoff längs der gemeinsamen Achse vorgesehen ist.

4. Verwendung nach einem der vorangehenden Ansprüche, dadurch gekennzeichnet, daß die bevorzugt für atomaren Wasserstoff permeable Wandung aus Eisen, Stahl, Nickel oder Nickelbasislegierung besteht.

5. Verwendung nach einem der vorangehenden Ansprüche, gekennzeichnet durch eine kaskadenförmige Hintereinanderschaltung mehrerer Trennvorrichtungen.

**Claims**

1. Use of a device comprising two chambers adapted to be closed by valves and enclosed on all sides and having walls of a material not pervious to hydrogen isotopes, one of said chambers being connected to a gas supply conduit and a gas discharge conduit and the other being evacuatable, and said chambers being separated from one another by a wall pervious preferably for atomic hydrogen and only to a relatively lesser extent for molecular hydrogen, an arrangement for conversion of molecular hydrogen to atomic hydrogen being provided in the chamber connected to the gas supply and gas discharge conduit, for the separation and enrichment of a hydrogen isotope from a gaseous hydrogen isotope mixture.

2. Use according to claim 1, characterised in that the arrangement for conversion of molecular hydrogen into atomic hydrogen is formed of a filament or wire.

3. Use according to claim 1 or 2, characterised in that the chambers are arranged coaxially, the arrangement for conversion of molecular hydrogen to atomic hydrogen being situated along the common axis.

4. Use according to one of the preceding claims, characterised in that the wall pervious preferably for atomic hydrogen consists of iron, steel, nickel or a nickel base alloy.

5. Use according to one of the preceding claims, characterised by arranging a plurality of separating devices in series connection in cascade manner.

**Revendications**

1. Utilisation d'un dispositif constitué par deux chambres fermées de tous côtés, pouvant être obturées au moyen de valves et comportant des parois constituées en un matériau non perméable pour des isotopes d'hydrogène, et dont l'une est reliée à une conduite d'arrivée du gaz et à une conduite de sortie du gaz, tandis que dans l'autre, le vide peut être réalisé, ces chambres étant séparées l'une de l'autre par une paroi perméable de préférence pour l'hydrogène atomique et seulement à un degré plus faible pour l'hydrogène moléculaire, et dans lequel un dispositif servant à transformer l'hydrogène moléculaire en hydrogène atomique est disposé dans la chambre reliée à la conduite d'arrivée et à la conduite de sortie du gaz, pour la séparation et l'enrichissement d'un isotope d'hydrogène à partir d'un mélange gazeux d'isotopes d'hydrogène.

2. Utilisation suivant la revendication 1, caractérisée par le fait que le dispositif servant à transformer l'hydrogène moléculaire en hydrogène atomique est constitué par un filament ou un fil.

3. Utilisation suivant la revendication 1 ou 2, caractérisée par le fait que les chambres sont disposées coaxialement, le dispositif servant à transformer l'hydrogène moléculaire en hydrogène atomique étant prévu le long de l'axe commun.

4. Utilisation suivant l'une des revendications précédentes, caractérisée par le fait que la paroi perméable de préférence pour l'hydrogène atomique est constitué par du fer, de l'acier, du nickel ou un alliage à base de nickel.

5. Utilisation suivant l'une des revendications précédentes, caractérisée par un montage en cascade de plusieurs dispositifs de séparation.